# DEMANDE DE BREVET EUROPEEN

(11) **EP 0 843 144 A1**
(43) Date de publication de la demande: **20.05.1998**
(21) Numéro de dépôt: 97460046.2
(22) Date de dépôt: 12.11.1997
(51) Int. Cl.: F28D 1/03

(54) **Radiateur à panneau présentant un demi-corps de surface essentiellement plane et procédé de fabrication d'un tel radiateur**

(30) Priorité: 18.11.1996 FR 9614253
(71) Demandeur: COMPAGNIE INTERNATIONALE DU CHAUFFAGE, 93158 Le Blanc Mesnil Cédex (FR)
(72) Inventeur: Eustache, Bernard, 37100 Tours (FR); Soulez, Guy, 78960 Voisin Le Bretonneux (FR)
(74) Mandataire: Vidon, Patrice

(57) **Abrégé**

L'invention concerne un radiateur incluant au moins un panneau constitué par l'assemblage d'un demi-corps arrière soudé à un demi-corps avant (3), caractérisé en ce que ledit demi-corps avant (3) présente une surface essentiellement plane montrant seulement un à quatre canaux (4,5,6,7) répartis sur sa périphérie, lesdits un à quatre canaux (4,5,6,7) permettant de rigidifier ledit demi-corps avant (3). L'invention concerne également un procédé de fabrication de tels radiateurs comprenant au moins une étape consistant à détecter le positionnement desdits demi-corps avant (3) sur une chaîne d'assemblage par soudage de demi-corps avants (3) et de demi-corps arrières en repérant au moins l'un desdits canaux (4,5,6,7) desdits demi-corps avants (3).

## Description

L'invention concerne le domaine de la conception et de la réalisation des radiateurs.

On connaît dans l'état de la technique de nombreux types de radiateurs.

Les plus anciens sont constitués de structures en fonte délimitant un collecteur haut, un collecteur bas et une pluralité d'éléments en forme de tuyaux reliant ces collecteurs.

Les radiateurs contemporains sont quant à eux, d'une façon classique, fréquemment constitués d'un mince panneau réalisé par l'association de deux demi-corps soudés entre eux et présentant des surfaces irrégulières, généralement ondulées, délimitant un collecteur haut, un collecteur bas et une pluralité de canaux transversaux prévus entre ces collecteurs.

Un problème impliqué par les radiateurs résulte de leur caractère généralement peu esthétique qui a conduit à rechercher des moyens pour les intégrer au décor des pièces dans lesquelles ils sont installés.

Il a ainsi été proposé dans l'état de la technique de recouvrir les radiateurs de coffres décoratifs pourvus de grilles permettant l'émission de la chaleur produite par ceux-ci. Une telle technique présente l'inconvénient d'être relativement coûteuse à réaliser et conduit à souligner la présence des radiateurs ainsi équipés dans les pièces ou ils se trouvent. Or, la tendance actuelle dans l'aménagement et la décoration d'intérieur est plutôt à l'harmonisation et donc à la recherche de moyens permettant de "fondre" le radiateur dans le décor de la pièce.

Un objectif de la présente invention est donc de proposer un radiateur du type de ceux constitués d'au moins un panneau réalisé par l'association de deux demi-corps soudés entre eux, qui présente une structure permettant de l'habiller, de façon à obtenir une telle harmonie.

En particulier, un objectif de la présente invention est de décrire un tel radiateur qui présente de plus une rigidité suffisante pour l'empêcher de gondoler.

Encore un autre objectif de l'invention est de fournir un tel radiateur qui puisse être facilement fabriqué, et notamment qui puisse être fabriqué en n'apportant que quelques modifications aux chaînes de fabrication des radiateurs de l'état de l'art.

Ces objectifs, ainsi que d'autres qui apparaîtront par la suite sont atteints grâce à l'invention qui concerne un radiateur incluant au moins un panneau constitué par l'assemblage d'un demi-corps arrière soudé à un demi-corps avant, caractérisé en ce que ledit demi-corps avant présente une surface essentiellement plane montrant seulement un à quatre canaux répartis sur sa périphérie, lesdits un à quatre canaux permettant de rigidifier ledit demi-corps avant. On notera que l'on entend dans la présente description les termes "demi-corps avant" comme visant celui des deux demi-corps constituant le panneau qui est exposé à la vue, et les termes "demi-corps arrière" comme visant celui des deux demi-corps constituant le panneau qui est généralement destiné à être fixé à un mur ou à une autre structure porteuse et qui donc n'est pas exposé à la vue.

Le radiateur selon l'invention présente donc une surface essentiellement plane autorisant un habillage du radiateur et donc une intégration dans le décor de la pièce dans laquelle il se trouve.

Par ailleurs, le radiateur présente une rigidité suffisante l'empêchant de gondoler procurée par la présence sur la surface de son demi-corps avant de un à quatre canaux.

Selon une variante de l'invention, ledit demi-corps avant présente un canal supérieur prévu dans sa partie haute, parallèlement à son bord supérieur et formant un collecteur haut avec ledit demi-corps arrière.

Egalement selon une variante de l'invention, ledit demi-corps avant présente un canal inférieur prévu dans sa partie basse, parallèlement à son bord inférieur et formant un collecteur bas avec ledit demi-corps arrière.

Selon une autre variante de l'invention, ledit demi-corps avant présente au moins un canal d'extrémité prévu parallèlement à au moins l'un des ses deux bords latéraux.

Selon une variante préférentielle de l'invention, le radiateur est caractérisé en ce qu'il présente quatre canaux, à savoir :
- un canal supérieur prévu dans sa partie haute, parallèlement à son bord supérieur et formant un collecteur haut avec ledit demi-corps arrière ;
- un canal inférieur prévu dans sa partie basse, parallèlement à son bord inférieur et formant un collecteur bas avec ledit premier demi-corps ;
- un premier canal d'extrémité prévu à l'un de ses bords latéraux ; et,
- un second canal d'extrémité prévu à l'autre de ses bords latéraux.

Comme précisé ci-dessus, le ou les canaux dont est pourvu le demi-corps avant permet(tent) de conférer à celui-ci une rigidité suffisante pour empêcher toute déformation de celui-ci. Ce demi-corps avant peut donc être réalisé dans la même tôle que celle utilisée pour la réalisation du demi-corps arrière. Ainsi, préférentiellement, ledit demi-corps avant présente une épaisseur inférieure ou égale à environ 1,5 mm.

Egalement préférentiellement, ledit demi-corps arrière présente une surface ondulée montrant un premier canal prévu dans sa partie haute, un second canal prévu dans sa partie basse essentiellement parallèlement audit premier canal et une pluralité de canaux transversaux reliant ledit premier canal audit second canal.

Avantageusement, ledit demi-corps arrière est pourvu d'ailettes favorisant la convexion de la chaleur émise par ledit radiateur.

L'invention couvre également tout demi-corps avant pour la réalisation d'un radiateur tel que décrit ci-dessus et donc caractérisé en ce qu'il présente une surface essentiellement plane montrant seulement un à quatre canaux répartis sur sa périphérie, lesdits un à quatre canaux permettant de rigidifier ledit demi-corps avant, ainsi que tout panneau constitué d'un tel demi-corps et d'un demi-corps arrière, pour la réalisation d'un tel radiateur.

L'invention couvre aussi un procédé de fabrication de radiateurs tels que décrits ci-dessus, procédé caractérisé en ce qu'il comprend au moins une étape consistant à détecter le positionnement desdits demi-corps avant sur une chaîne d'assemblage par soudage de demi-corps avants et de demi-corps arrières en repérant au moins l'un desdits canaux desdits demi-corps avants.

L'invention, ainsi que les différents avantages qu'elle présente, seront plus facilement compris grâce à la description qui va suivre de deux modes de réalisation non limitatifs de celle-ci, en référence aux dessins, dans lesquels :
- la figure 1 représente une vue de face du demi-corps avant d'un premier mode de réalisation de l'invention ;
- la figure 2 représente une coupe longitudinale selon la ligne A-A' du demi-corps montré à la figure 1 ;
- la figure 3 représente une coupe transversale selon la ligne B-B' du demi-corps montré à la figure 1;
- la figure 4 montre un détail de la figure 3 ;
- la figure 5 montre une vue générale en transparence partiellement déchirée dudit premier mode de réalisation ;
- la figure 6 représente une vue de dessus en coupe transversale partielle de ce premier mode de réalisation ;
- la figure 7 représente une vue en coupe de la partie supérieure de ce premier mode de réalisation :
- la figure 8 représente une vue de côté d'un second mode de réalisation du radiateur selon l'invention ;
- la figure 9 montre une vue de dessus de ce second mode de réalisation.

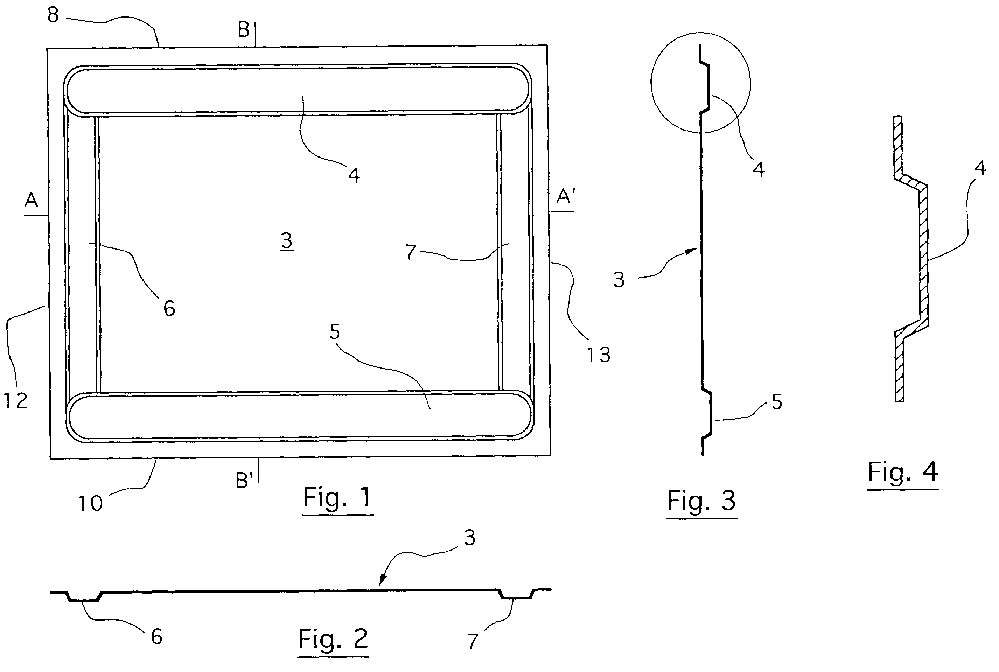

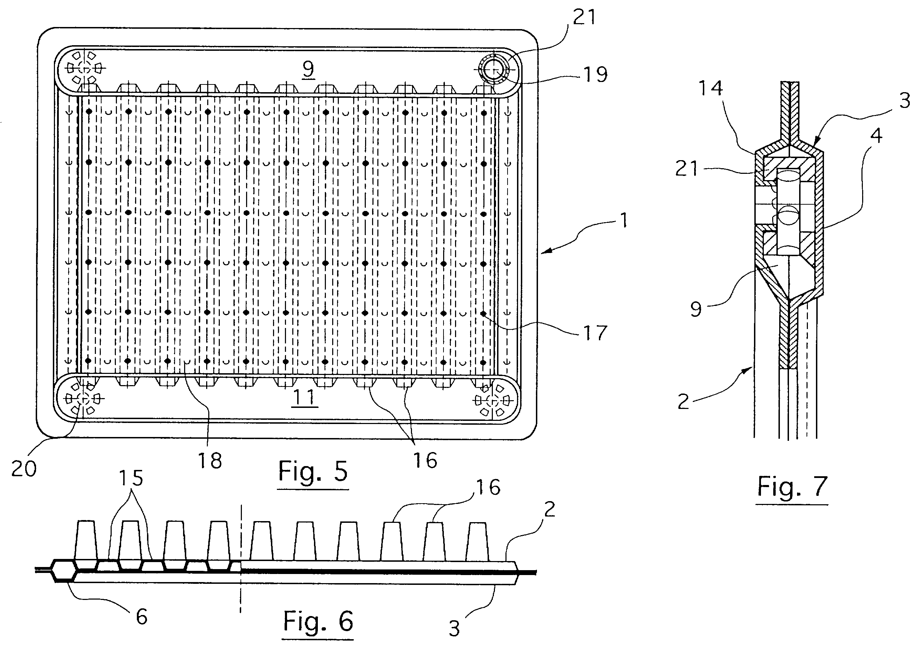

En référence aux figures 1 à 3, le radiateur selon l'invention comprend un panneau (qui sera plus précisément décrit ci-après dans son ensemble en référence aux figures 5 à 7), un demi-corps avant 3, destiné à être exposé à la vue, pourvu d'une surface essentiellement plane. Une telle surface essentiellement plane autorise un habillage aisé de ce demi-corps à l'aide tout support décoratif prévu à cet effet.

Comme on peut le voir sur la figure 1, ce demi-corps avant 3 présente quatre canaux périphériques, à savoir :
- un canal supérieur 4 prévu dans sa partie haute, parallèlement à son bord supérieur 8 ;
- un canal inférieur 5 prévu dans sa partie basse, parallèlement à son bord inférieur 10 ;
- un premier canal d'extrémité 6 prévu à l'un de ses bords latéraux 12 ; et,
- un second canal d'extrémité 7 prévu à l'autre de ses bords latéraux 13.

Comme il ressortira plus précisément de la description donnée ci-après du panneau de radiateur dans son ensemble, le canal supérieur 4 du demi-corps avant est destiné à former un collecteur haut avec un demi-corps arrière tandis que le canal inférieur 5 est destiné à former un collecteur bas avec celui-ci. De tels collecteurs permettent la circulation horizontale du fluide du chauffage par passage dans les canaux prévus entre ceux-ci. La taille des canaux 4,5,6,7 pourra être déterminée par l'homme de l'art afin d'autoriser ceux-ci à participer efficacement au maintien de la planéité du demi-corps avant. En ce qui concerne le canal supérieur 4, celui devra être suffisamment large pour ne pas impliquer de perte de charge trop élevé lors de la pénétration du fluide de chauffage par l'embout adapté sur ce panneau et ne pas être trop large pour bien résister à la pression de ce fluide de façon à ne pas engendrer de déformation du demi-corps.

La disposition des quatres canaux 4,5,6,7 sur le demi-corps avant, telle que montrée à la figure 1, permet de conférer à cet élément rigidité et tenue mécanique, et ainsi d'autoriser l'utilisation d'une tôle relativement mince pour le réaliser, sans risque de voir le demi-corps se gondoler lors de la fabrication ou lors de l'utilisation du radiateur. A ce sujet on notera que bien qu'un telle utilisation de quatre canaux périphériques constitue le mode de réalisation préférentiel de l'invention, car le plus susceptible de rigidifier efficacement le demi-corps avant, l'invention couvre également d'autres modes de réalisation dans lesquels le demi-corps avant pourra présenter un, deux ou trois canaux positionnés sur un ou plusieurs bords de cet élément.

En référence aux figures 2 à 4, les canaux 4,5,6,7 présentent une section transversale en forme de U, le demi-corps avant 3 étant réalisé, selon une technique classique de l'état de la technique, par emboutissage d'une tôle de faible épaisseur ( égale à 1,5 mm dans le cadre du présent mode de réalisation mais qui peut être différente dans le cadre d'autres modes de réalisation) correspondant à celle de la tôle utilisée pour fabriquer le demi-corps arrière.

Selon une telle caractéristique, il est donc possible d'utiliser la même tôle pour la fabrication du demi-corps avant et celle du demi-corps arrière, ce qui constitue un avantage non négligeable n'induisant pas les problèmes liés à l'utilisation de matériaux distincts pour réaliser ces différents éléments.

En référence aux figures 5 et 6, le premier mode de réalisation du radiateur selon l'invention inclut un panneau 1. On notera que le terme "radiateur" désigne dans le vocabulaire utilisé par l'homme de l'art l'ensemble constitué par un tel panneau et des accessoires de connexion au circuit de chauffage et d'accrochage mural de celui-ci, un radiateur pouvant par ailleurs être constitué par l'association de plusieurs panneaux. Pour les besoins de clarté de la description, seul le panneau du radiateur selon le premier mode de réalisation a été montré à la figure 1, l'invention portant sur cet élément du radiateur.

Le panneau 1 constituant le radiateur selon le premier mode de réalisation de l'invention inclut donc, outre le demi-corps avant 3 décrit ci-dessus, un demi-corps arrière 2 de facture classique, les deux demi-corps étant soudés entre eux et délimitant le collecteur haut 9 et le collecteur bas 11. Sur la figure 5, les points de soudure entre les deux demi-corps 2 et 3 sont symbolisés par les points 17.

Plus précisément en référence à la figure 6, le demi-corps arrière 2 présente une structure ondulée (bien visible sur la partie gauche en coupe transversale du panneau 1) délimitant les canaux transversaux 15 conduisant les veines d'eau circulant du collecteur haut 9 vers le collecteur bas 11.

On notera également que ce demi-corps arrière 2 est muni d'un tapis d'ailettes 16 dont l'objectif est de favoriser la convexion de la chaleur provenant du radiateur au cours de son utilisation. Sur la figure 6, les points de soudure de ce tapis d'ailettes sur le demi-corps arrière sont symbolisés par les points 18. Au sujet de ce tapis d'ailettes, on notera qu'il présentera avantageusement une teinte noire, pour des raisons esthétiques, cet élément devant être aussi discret que possible, mais également pour des raisons techniques puisque l'emploi d'une telle couleur permet d'accroître le phénomène de convexion autorisé par les ailettes en question.

Toujours en référence à la figure 5, le demi-corps arrière 2 du panneau 1 présente dans sa partie supérieure droite, un orifice 19 pouvant accueillir un embout (non représenté) pour le raccordement du radiateur au circuit de chauffage. Un orifice 20 est également présent dans sa partie inférieure gauche, permettant également d'accueillir un embout (non représenté) pour l'évacuation du fluide de chauffage ayant transité dans le radiateur. D'une façon classique, le fluide de chauffage arrive dans le radiateur par l'embout fixé à l'orifice 20, transite dans le collecteur haut 9 d'où il est réparti dans les canaux transversaux 15 avant de transiter dans le collecteur bas 11 et quitte le radiateur tpar l'embout fixé à l'orifice 20.

En référence à la figure 7, un élément intercalaire 21 est prévu au niveau de chaque extrémité du collecteur haut 9. Il en est de même pour le collecteur bas. De tels éléments intercalaires 21 sont constitués par des rondelles d'épaisseur calibrée disposées entre les deux demi-corps et font office d'entretoises lors de la soudure des embouts de raccordements.

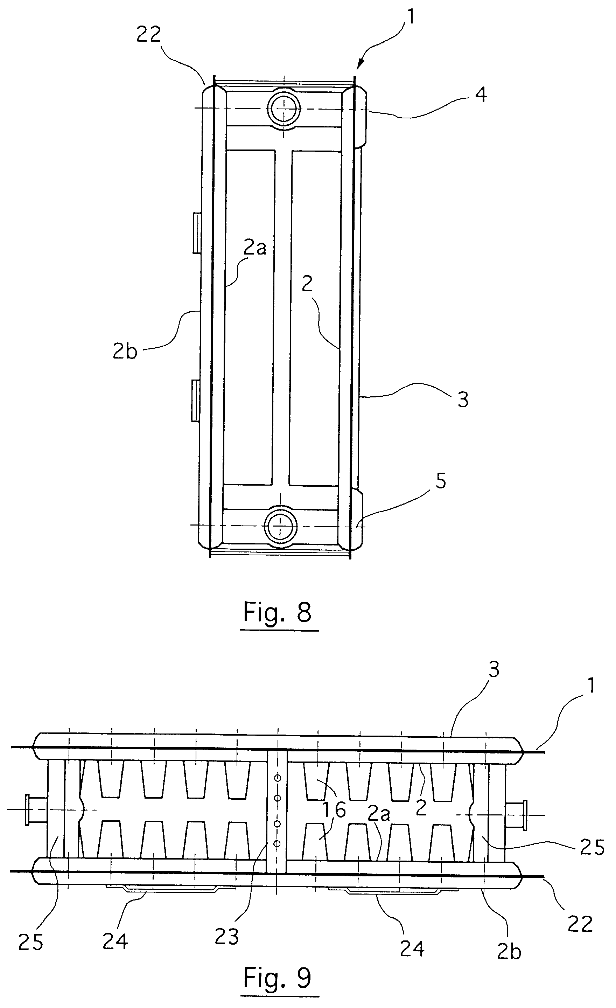

En référence aux figures 8 et 9, un second mode de réalisation d'un radiateur selon l'invention est représenté. Ce mode de réalisation inclut deux panneaux, à savoir un premier panneau 1 tel que décrit en référence aux figures 1 à 7 ci-dessus et constitué par le soudage d'un demi-corps avant 3 présentant une surface essentiellement plane et d'un demi-corps arrière 2 présentant une surface ondulée et un second panneau 22 réalisé par le soudage de deux demi-corps 2a,2b semblables au demi-corps arrière 2 du premier panneau.

Ces deux panneaux 1 et 22 sont réunis par deux écarteurs 23 constitués chacun par une pièce en tôle forte assurant l'écartement régulier d'un tel radiateur double soudés aux demi-corps arrière 2 et 2a. (On notera qu'il pourra bien évidemment être prévu d'utiliser un nombre d'écarteurs différents dans d'autres modes de réalisation, notamment en fonction de la largeur du radiateur). Le passage du fluide de chauffage entre les deux panneaux 1 et 22 est assuré par quatre connexions 25.

Enfin, quatre barrettes 24 sont par ailleurs soudés sur le demi-corps 2b du second panneau 22 pour permettre l'accrochage mural de ce radiateur . (Il pourra également être utilisé un nombre de barrettes différent dans d'autres modes de réalisation, notamment en fonction de la largeur du radiateur).

Tant le premier mode de réalisation que le second mode de réalisation ici décrits en référence aux dessins permettent d'habiller le radiateur, par exemple à l'aide d'un ensemble constitué d'une grille ou d'un plateau supérieur(e) et de deux joues latérales et de pourvoir la surface plane d'un revêtement décoratif tel que du papier peint. Un tel avantage est autorisé par l'emploi de seulement quatre canaux sur les demi-corps avants utilisés pour ces deux modes de réalisation.

Comme déjà précisé, ces canaux permettent par ailleurs d'assurer la rigidité de ce demi-corps. De surcroît, ces canaux peuvent également être avantageusement exploités dans le cadre d'un procédé de fabrication de radiateurs selon l'invention.

D'une manière classique, les procédés de l'état de la technique pour la fabrication de radiateurs du type de ceux comprenant un panneau constitué par le soudage de deux demi-corps incluent les étapes consistant à :
- réaliser des chapelets de panneaux constitués de demi-corps soudés entre eux, par soudure multipoint (plusieurs points de soudures) pour l'intérieur du panneau et par soudure par mollette pour une soudure continue et étanche sur les bords des panneaux ;
- cisailler les chapelets de façon à individualiser les panneaux réalisés.

Sur les chaînes de montage classique, le repérage de la longueur des panneaux est effectué en comptant les canaux transversaux dont sont pourvus ceux-ci.

La présence, selon l'invention, de canaux sur les demi-corps avant permet de repérer facilement l'avancement de ceux-ci sur les chaînes de fabrication et donc d'optimiser de telles chaînes, sans qu'il soit nécessaire de mettre en oeuvre un comptage des canaux transversaux des demi-corps qui ne sont présents que sur les demi-corps arrières. Comme précisé ci-dessus, le repérage des canaux des demi-corps avants peut être effectué grâce à des capteurs, par exemple des capteurs de proximité décelant la passage des canaux faisant saillie du reste de la surface des panneaux.

Les modes de réalisation de l'invention ici décrits n'ont pas pour objet de réduire la portée de celle-ci. Il pourra donc y être apporté de nombreuses modifications sans sortir du cadre de celle-ci. En particulier on notera que l'on pourra utiliser un nombre de canaux de demi-corps avants et des structures de demi-corps arrières différentes de celles représentées.

## Revendications

1. Radiateur incluant au moins un panneau (1) constitué par l'assemblage d'un demi-corps arrière (2) soudé à un demi-corps avant (3), caractérisé en ce que ledit demi-corps avant (3) présente une surface essentiellement plane montrant seulement un à quatre canaux (4,5,6,7) répartis sur sa périphérie, lesdits un à quatre canaux (4,5,6,7) permettant de rigidifier ledit demi-corps avant (3).

2. Radiateur selon la revendication 1 caractérisé en ce que ledit demi-corps avant (3) présente un canal supérieur (4) prévu dans sa partie haute, parallèlement à son bord supérieur (8) et formant un collecteur haut (9) avec ledit demi-corps arrière (2).

3. Radiateur selon la revendication 2 caractérisé en ce que ledit demi-corps avant (3) présente un canal inférieur (5) prévu dans sa partie basse, parallèlement à son bord inférieur (10) et formant un collecteur bas (11) avec ledit demi-corps arrière (2).

4. Radiateur selon l'une quelconque des revendications 1 à 3 caractérisé en ce que ledit demi-corps avant (3) présente au moins un canal d'extrémité (6,7) prévu parallèlement à au moins l'un des ses deux bords latéraux (12,13).

5. Radiateur selon l'une quelconque des revendications 1 à 4 caractérisé en ce qu'il présente quatre canaux (4,5,6,7), à savoir :
- un canal supérieur (4) prévu dans sa partie haute, parallèlement à son bord supérieur (8) et formant un collecteur haut (9) avec ledit demi-corps arrière (2) ;
- un canal inférieur (5) prévu dans sa partie basse, parallèlement à son bord inférieur (10) et formant un collecteur bas (11) avec ledit demi-corps arrière (2) ;
- un premier canal d'extrémité (6) prévu à l'un de ses bords latéraux (12) ; et,
- un second canal d'extrémité (7) prévu à l'autre de ses bords latéraux (13).

6. Radiateur selon l'une quelconque des revendications 1 à 5 caractérisé en ce que ledit demi-corps avant (3) présente une épaisseur inférieure à 1,5 mm.

7. Radiateur selon l'une quelconque des revendications 1 à 6 caractérisé en ce que ledit demi-corps arrière (2) présente une surface ondulée montrant un premier canal (14) prévu dans sa partie haute, un second canal prévu dans sa partie basse essentiellement parallèlement audit premier canal et une pluralité de canaux transversaux (15) reliant ledit premier canal (14) audit second canal.

8. Radiateur selon l'une des revendications 1 à 7 caractérisé en ce que ledit demi-corps arrière (2) est pourvu d'ailettes (16) favorisant la convexion de la chaleur émise par ledit radiateur.

9. Demi-corps avant (3) pour la réalisation d'un radiateur selon l'une des revendications 1 à 8 caractérisé en ce qu'il présente une surface essentiellement plane montrant seulement un à quatre canaux (4,5,6,7) répartis sur sa périphérie, lesdits un à quatre canaux permettant de rigidifier ledit demi-corps avant (3).

10. Panneau constitué d'un demi-corps avant (3) selon la revendication 9 et d'un demi-corps arrière (2), pour la réalisation d'un radiateur selon l'une quelconque des revendications 1 à 8.

11. Procédé de fabrication de radiateurs selon l'une des revendications 1 à 8 caractérisé en ce qu'il comprend au moins une étape consistant à détecter le positionnement desdits demi-corps avant (3) sur une chaîne d'assemblage par soudage de demi-corps avants (3) et de demi-corps arrières (2) en repérant au moins l'un desdits canaux (4,5,6,7) desdits demi-corps avants (3).
